(19) Europäisches Patentamt / European Patent Office / Office européen des brevets

(11) **EP 2 774 203 B1**

(12) **EUROPEAN PATENT SPECIFICATION**

(45) Date of publication and mention of the grant of the patent:
**23.03.2016 Bulletin 2016/12**

(51) Int Cl.:
*H01M 8/10* (2006.01)   *H01M 4/88* (2006.01)
*H01M 4/94* (2006.01)

(21) Application number: **12779088.9**

(86) International application number:
**PCT/EP2012/071732**

(22) Date of filing: **02.11.2012**

(87) International publication number:
**WO 2013/064640 (10.05.2013 Gazette 2013/19)**

(54) **METHOD FOR THE PREPARATION OF CATALYST-COATED MEMBRANES**

VERFAHREN ZUR HERSTELLUNG KATALYSATORBESCHICHTETER MEMBRANEN

PROCÉDÉ DE PRÉPARATION DE MEMBRANES REVÊTUES DE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011 EP 11187936**

(43) Date of publication of application:
**10.09.2014 Bulletin 2014/37**

(73) Proprietor: **SolviCore GmbH & Co KG**
**63457 Hanau-Wolfgang (DE)**

(72) Inventors:
• **GHIELMI, Alessandro**
  **60325 Frankfurt am Main (DE)**
• **MERLO, Luca**
  **I-22030 Montorfano (IT)**
• **BINDER, Matthias**
  **63594 Hasselroth (DE)**
• **FACCHI, Daniele**
  **25038 Rovato (IT)**
• **ARCELLA, Vincenzo**
  **I-20014 Nerviano (MI) (DE)**

(74) Representative: **Lischka, Kerstin**
**Umicore AG & Co. KG**
**Patents**
**Rodenbacher Chaussee 4**
**63457 Hanau-Wolfgang (DE)**

(56) References cited:
**EP-B1- 1 702 669    US-B2- 6 855 178**

## Description

The present invention is directed to a method for the preparation of catalyst-coated membranes for use in electrochemical cells, more specifically to the manufacture of integral catalyst-coated membranes for use in PEM (polymer-electrolyte-membrane) fuel cells. The process comprises the application of a coating dispersion containing an ion exchange resin (ionomer) onto a catalyst layer applied to a supporting substrate. According to the invention, the ionomer dispersion is characterized by a low viscosity and a high ionomer concentration.

## Background of invention

Fuel cells are electrochemical cells that convert reactants, namely fuel and oxidant fluid streams, to generate electric power and heat. A broad range of reactants can be used in fuel cells and such reactants may be delivered in gaseous or liquid streams. For example, the fuel stream may be substantially pure hydrogen gas, a gaseous hydrogen-containing reformate stream or an aqueous alcohol, for example methanol in a direct methanol fuel cell (DMFC). The oxidant may, for example, be pure oxygen or a dilute oxygen stream such as air.

Among the various fuel cell types developed so far, PEMFC (polymer electrolyte membrane fuel cells) are gaining increased importance for mobile, stationary and portable applications. In such PEM fuel cells, the polymer electrolyte membrane is typically a perfluorinated sulfonic acid polymer membrane in acid form. The membrane is disposed between and in contact with an anode and a cathode layer; electrocatalysts in the anode and in the cathode induce the desired electrochemical reactions of hydrogen oxidation (at the anode) and oxygen reduction (at the cathode) in the PEM fuel cell.

The key component of the PEM fuel cell is the so-called catalyst-coated membrane (hereinafter abbreviated "CCM"). Catalyst-coated membranes are built in a layered structure and consist essentially of an anode catalyst layer (negative electrode of the fuel cell), an ionomer membrane and a cathode catalyst layer (positive electrode). The membrane is disposed between and in contact with both catalyst layers. Further components, such as gas diffusion layers or sealing materials may be added. An assembly including a 3-layer catalyst-coated membrane (CCM) and two gas diffusion layers (GDLs) attached to either side is frequently called a membrane-electrode-assembly (MEA). As a result, such MEAs consist of five layers. Bipolar plates made of conductive material and providing flow fields for the reactants are placed between adjacent MEAs. A number of MEAs and bipolar plates are assembled in this manner to provide a fuel cell stack.

In the past, processes have been developed, in which the three layers of a CCM (i.e. the first catalyst layer, the ionomer membrane and the second catalyst layer) are subsequently fabricated on top of each other with or without intermediate drying steps. Such processes are called "integral processes" in the context of this patent application. Generally, the CCM is on a supporting substrate during the complete fabrication process thus no delamination and/or relamination steps are needed. Further, such integral processes provide extremely good interfaces between membrane and electrodes without the need to apply pressure. Thus, the integrity of the membrane is preserved.

The CCM-product manufactured according to said "integral processes" or "integral methods" will be referred to in the following as "integral CCM", since the CCM is formed as an integral structure with very good adhesion between the different layers. Generally, the terms "integral catalyst-coated membrane" and "integral CCM" as used in the present application refer to catalyst-coated membranes (CCMs) manufactured according to a process, in which the ionomer membrane is fabricated in contact with at least one catalyst layer by the use of liquid ionomer compositions.

The present invention is directed to a method of manufacture of integral catalyst-coated membranes (CCMs) for PEM fuel cells.

Numerous methods for fabricating CCMs have been reported in the prior art.

A typical method is the so-called "decal method", wherein the two catalyst layers (anode and cathode) are separately provided on two supporting films and transferred by heat and pressure to the two opposite surfaces of the ionomer membrane (decal transfer process). Although this method has the advantage of preventing the contact between the membrane and the solvents of the catalyst ink which is typically used for the fabrication of the electrodes, it has some disadvantages. First, the method contains many processing steps (such as separate electrode and membrane fabrication steps, decal transfer step etc). Secondly, the contact of the catalyst layers to the membrane is not optimal due to the dry application of the electrodes to the membrane. Finally, as pressure is employed during the decal transfer process, the membrane could be damaged. This may cause shorts or reduced durability, especially if the membrane is very thin (e.g. 15 $\mu$m or less).

Another typical method of fabricating a CCM is the direct coating of the ionomer membrane with catalyst layers (ref. e.g. to US6,074,692 and US7,285,307). This method is considered to provide a better interface between electrodes and membrane compared to the decal method due to the wet deposition of the layers; however it still has significant drawbacks. During the coating process, the membrane can swell significantly; therefore it is recommended that the coating of the catalyst layers is performed while the membrane is carried by a supporting foil during the production steps (ref to EP1645001). This necessitates additional delamination and relamination steps, which complicate the process and may become critical when handling extremely thin membranes.

To overcome the limitations of the fabrication methods described above, processes have been developed where, starting from a support film, the three layers of a CCM are subsequently fabricated on top of each other, with or without intermediate drying steps. Such "integral processes" and "integral CCMs" as defined before, are subject to the present patent application.

EP1702669B1 describes an integral method to prepare a CCM consisting of the following steps: 1) coating of a first electrocatalytic layer on an inert support, 2) coating of an ionomeric membrane onto the first electrode, 3) coating of a second electrocatalytic layer onto the membrane and 4) annealing the 3-layer structure on the inert support. It is disclosed that the ionomer dispersion used for coating of the membrane onto the first catalyst layer (step 2), needs to have a sufficiently high viscosity, i.e. higher than 100 cP and preferably higher than 500 cP (at 25°C and shear rate of 0.1 s$^{-1}$). Such high viscosities are claimed to be required in order to prevent the first catalyst layer from being removed from the insert support and to avoid penetration of the ionomer dispersion into the pores of the electrode layer. Example 2 of EP1702669B1 uses dispersions with a viscosity of 1000 cP.

EP1438762B1 describes the preparation of CCMs according to the integral method. An ionomeric dispersion is applied to the free surface of a first electrode applied to a temporary support and then dried to form a membrane. A second electrode is then fabricated on top of the membrane free surface and dried. The resulting CCM is finally detached from the temporary support. Example 1 teaches that a sealing layer of Nafion® dispersion or Nafion®-rich catalyst ink in a fast-drying solvent should be applied on top of the first catalyst layer to prevent seepage of the ionomer into the pore structure of the electrode when subsequently fabricating the membrane on the electrode surface. While a 12 wt.-% solids dispersion of ionomer in n-butanol solvent is used for the membrane fabrication in the Example, the preferred characteristics of the ionomer dispersion for the membrane fabrication are not disclosed.

US6,855,178B2 describes another method for manufacture of integral CCMs. The patent teaches that it is preferable if the first catalyst layer corresponds to the anode, while the second catalyst layer serves as the cathode. This is because the ionomer constituting the ion-exchange membrane impregnates the pores of the first catalyst layer and solidifies therein, making the catalyst layer too dense to be properly used as a cathode due to the limited mass transfer rate of oxygen, which would deteriorate the current-voltage characteristics of the cell. The ionomer coating solutions are defined to have solid contents between 1 and 50 wt.-%, particularly between 5 and 35 wt.-%; no mention is made in regard to the viscosity of such ionomer solutions.

Further, US2005/0019649 A1 discloses a process for making integral CCMs. No mention is made to the characteristics of the ionomer solution to form the ionomer film onto the first electrode layer.

US2006/0057281 A1 describes a CCM production method, wherein, after spreading a first coating compound over a substrate to form a first catalyst layer, an ionomer solution (second coating compound) is spread over the catalyst layer while this is still wet to form an electrolyte layer. A third coating compound is then spread over the electrolyte layer to form a second catalyst layer, either after drying the surface of the electrolyte layer or without any drying of the electrolyte layer. According to US2006/0057281, coating the electrolyte layer on top of the first catalyst layer while this is still wet prevents penetration of the ionomer into the voids of the catalyst layer, thus preventing deterioration of the electrical properties. When the second catalyst layer is coated over the ionomer layer before drying of said ionomer layer, the patent application teaches that one way to avoid cracking of the second catalyst layer is to provide the ionomer compound with a sufficiently high viscosity. It is proposed to introduce a thickening or gelatinizing agent. The viscosity of the ionomer coating compound ($\eta_1$) should not be lower than 1/25 of that of the coating compound used to fabricate the second catalyst layer ($\eta_2$) and one embodiment teaches that the viscosity $\eta_1$ of the electrolyte coating compound should be even greater than that of the coating compound used to fabricate the second catalyst layer $\eta_2$ ($\eta_1 > \eta_2$). Example 3 reports the following characteristics for the electrolyte coating compound: 23.5 wt.-% of ionomer and $\eta_1$=0.7 Pa s (=700 cP) measured at 25°C and 1 s$^{-1}$. In Example 4, introduction of a thickening agent brings the viscosity of the ionomer coating compound to values which are even twenty times higher.

The presentation "Manufacturing of low-cost, durable MEAs engineered for rapid conditioning", presented by W.L. Gore & Associates, Inc., at the U.S. Department of Energy Annual Merit Review Meeting, Washington DC, May 9-13, 2011 (paper No. MN004) describes a method for fabrication of a CCM comprising an expanded-PTFE reinforced membrane. In this method, a first electrode is coated on a backing support and dried. In a second step, an impregnated ePTFE film is deposited on top of the first electrode and then dried. Finally, the impregnated ePTFE film is coated with a second electrode and dried to obtain a CCM. Still, such manufacturing methods need to be improved to allow the production of MEAs with excellent performance particularly under dry fuel cell operating conditions.

## Summary of the invention

The present invention is directed to improvements in the preparation of catalyst-coated membranes (CCMs) based on the "integral method". Based on the drawbacks of the prior art as described above, there is a need to combine the advantages of this integral CCM process with the high production speeds known from ionomer membrane production. In addition to this need, CCMs made by such integral processes should exhibit improved MEA properties, i.e. delivering improved fuel cell performance under all operating conditions, in particular with very dry gas feed.

It is an objective of the present invention to provide an integral CCM fabrication process with high membrane production speeds. It is a further objective of the present invention to provide a process yielding CCM products with high performance under all fuel cell operating conditions, in particular with dry feed gases.

**Detailed description of the invention**

Generally, high production speeds can be achieved in many coating processes by using low viscosity dispersions. Examples are dip-coating, knife coating, slot-die coating, slide coating, curtain coating and similar. Dispersions with low viscosity, low surface tension and high concentration are preferred for obtaining high-performance reinforced membranes, as detailed in WO2010/142772. However, in integral CCM fabrication processes, where the membrane is coated on top of the first electrode, the prior art teaches to avoid the use of low viscosity dispersions as ionomer coating compounds, due to penetration of the dispersion into the electrode with deterioration of the electrode properties.

To obtain CCMs with improved fuel cell performance under dry gas feed, it is generally feasible to increase the amount of ionomer present in the electrodes (i.e. the ionomer/catalyst ratio). However, this typically implies that when the PEMFC is operated under wet conditions, the electrodes, especially the cathode, are flooded and the cell performance is degrading. Particularly at higher current densities, more water is produced and more oxygen is required at the cathode side. Such increased amount of ionomer (i.e. a high ionomer/catalyst ratio) leads to a CCM product that is unable to operate robustly under the various conditions, which occur during the dynamic operation of a fuel cell, primarily in mobile PEMFC application.

It has been surprisingly found that if, during the fabrication of a CCM, the membrane is produced by directly coating it on top of a first electrode, using an ionomer dispersion which combines the characteristics of low viscosity and high ionomer concentration, the resulting CCM exhibits improved cell performance under all operating conditions, in particular with dry gas feed. Unexpectedly, the use of dispersions with low viscosity and high ionomer concentration not only results in the advantage of high membrane production speeds and improved membrane design, but also in improved electrode properties in fuel cell performance.

The present invention is directed to a method for preparing an 3-layer catalyst-coated membrane (CCM) consisting of a first catalyst layer, an ionomer membrane and a second catalyst layer; according to the invention, said method comprising the steps of

a) preparing a first catalyst layer on a supporting substrate,

b) coating the first catalyst layer with an ionomer dispersion to form an ionomer membrane in contact with the first catalyst layer,

c) applying the second catalyst layer on top of the ionomer membrane,

wherein the ionomer dispersion applied in step b) has a viscosity in the range of 10 to 400 centipoise (cP), preferably in the range of 10 to 200 cP and even more preferred in the range of 10 to 80 cP and an ionomer concentration in the range of 15 to 35 wt.-%, preferably in the range of 15 to 25 wt.-%.

In step a) of the CCM fabrication the first catalyst layer (first electrode) may be prepared by coating an ink containing an electrocatalyst on the supporting substrate. In another embodiment, the catalyst layer may by prepared by a vacuum deposition process on the supporting substrate. Further, combinations of coating and vacuum deposition processes may be employed.

In step b) of the CCM fabrication the membrane may be prepared by directly casting the ionomer dispersion on top of the catalyst layer to obtain what is commonly referred to as a "cast membrane", i.e. a dense membrane comprising predominantly ionomer, eventually in admixture with other inorganic or organic additives. In another embodiment, the ionomer dispersion is cast onto a microporous reinforcement film, which is then adhered to the first catalyst layer before the solvents of the ionomer dispersion are evaporated, to obtain a reinforced membrane in the final CCM.

Examples of microporous reinforcement films are expanded PTFE (ePTFE) as sold under the trademarks GORE-TEX®, Tetratex® and BHA-Tex®, microporous polyethylene as sold under the trademark SOLUPOR®, microporous polyproplylene as sold under the trademark Treo-Pore®, microporous PVDF, etc. Such microporous reinforcement films are typically produced by biaxial stretching of dense polymer films. Other methods may also be employed to obtain microporous reinforcement films, such as solvent-based phase inversion techniques and micromachining of films by excimer laser technology. Preparation by laser micromachining of microporous reinforcements suitable for fuel cell membranes is disclosed e.g. in US7,947,405 (ceramic reinforcements) and US7,867,669 (polymeric reinforcements).

The microporous support can be coated on both sides, e.g. by dip-coating or by slot-die coating, before adhering it to the first catalyst layer. Alternatively, the microporous reinforcement can be coated on one side, adhered to the first catalyst layer and eventually coated on the second (upper) side to complete impregnation with the ionomer dispersion. Alternatively, the microporous reinforcement can be embedded into the ionomer dispersion after it is deposited on the first electrode layer by casting. Independent of the application order of the ionomer to the microporous reinforcement, it is essential for realization of the present invention that the solvents of the ionomer dispersion are still substantially not evaporated when the ionomer dispersion comes in contact with the first electrode layer, so that the viscosity of the ionomer dispersion is within the range as specified by the present invention. This implies that when the dispersion is deposited on a microporous reinforcement prior to coming in contact with the first catalyst layer, the impregnated film must be brought in contact quickly with the first catalyst layer, in order to prevent substantial evaporation of the solvents.

In step c) of the present method, applying of the second catalyst layer may be done in different ways. In one embodiment, the second catalyst layer is directly coated on top of the membrane assembly, but other application methods are feasible. In a further embodiment of the invention, the second catalyst layer (electrode) is applied by a decal transfer process. This embodiment will be hereinafter referred to as "mixed approach", wherein the first catalyst layer is coated with an ionomer dispersion yielding a membrane assembly and the second catalyst layer is successively transferred to the first electrode-membrane assembly by a decal transfer process using heat and pressure. Hereby the second catalyst layer is prefabricated and provided on a supporting film (decal release film), positioned with the second catalyst layer facing the membrane side of the membrane/first catalyst-layer assembly and then transferred to the membrane using heat and pressure. Direct coating of the second catalyst layer on top of the membrane is particularly preferred when very thin membranes, namely thinner than 15 $\mu$m, are obtained in the process; in this case the risk of damaging the membrane during the decal transfer of the second catalyst layer is avoided.

In a further optional step d), the process of the present invention may comprise an annealing step. As an example, when the second electrode is cast on top of the membrane, an annealing step is preferably carried out after CCM completion, i.e. the 3 layers are annealed at once. Generally, said annealing step may be conducted after step b), after step c) or after step b) and step c). The annealing step consolidates the membrane and forms the best interface between membrane and both electrodes.

When applying the "mixed approach", an annealing step may be conducted before or after the decal transfer of the second catalyst layer or alternatively may be omitted, since the assembly has already been exposed to heat during the decal transfer process.

The annealing step d) is generally carried out at temperatures of at least 120°C, preferably of at least 150°C, more preferably of at least 170°C. The maximum temperature is not particularly limited, provided that the ionomers in the membrane layer and in the electrode layers are not affected and that the electrocatalysts in the electrodes are not deteriorated. The annealing step d) is therefore generally carried out at a temperature not exceeding 260°C, preferably not exceeding 240°C and even more preferred not exceeding 220°C.

The ionomer dispersion generally has a surface tension in the range of 15 to 50 mN/m, preferably in the range of 15 to 30 mN/m determined at 25°C. The surface tension of the ionomer dispersion of the invention is measured with a tensiometer according to ASTM D 1331 - 89 standard, method A.

Dispersions of (per)fluorinated ion exchange polymers are typically prepared by dissolving or suspending the (per)fluorinated ion exchange polymer (i.e. the ionomer) in an appropriate aqueous or aqueous-alcoholic medium. Methods useful for obtaining such liquid dispersions are described for example in US4,433,082, GB1286859, EP1004615A or US6,150,426.

Ionomers suitable for obtaining such dispersions are fully fluorinated (perfluorinated) or partially fluorinated polymers and typically contain the following functional groups, eventually in combination: sulfonic (-$SO_3H$), carboxylic (-COOH), phosphonic (-$PO_3H_2$), sulfonyl amide (-$SO_2NH_2$), bis-sulfonyl imide (-$SO_2NHSO_2$-), bis-carbonyl imide (-CONHCO-), sulfonyl carbonyl imide (-$SO_2NHCO$-). Hydrocarbon (non-fluorinated) ionomers may also be employed. Examples of such hydrocarbon ionomers are sulfonated polyetheretherketones, sulfonated polysulfones and sulfonated polystyrenes. Preferred ionomers used in the present invention are perfluorinated with sulfonic functional groups.

Perfluorinated ionomer dispersions are commercialized e.g. under the tradenames Nafion® DE, Aciplex® SS, Aquivion® D. These liquid compositions, sometimes referred to as solutions, are generally recognized as being dispersions (i.e. colloidal suspensions) of polymer particles. To the aim of the present invention, which requires the ionomer dispersions to be low in viscosity at high ionomer concentrations, the dispersions are preferably obtained by dissolving the ionomer in pure water at high temperatures (typically >180°C), and in a subsequent step formulating the dispersion with other solvents, e.g. alcohols or other polar solvents miscible with water. In fact, if the high-temperature dissolution step is carried out in the presence of solvents, such as alcohols, e.g. 2-propanol, t-butanol, which have the tendency to swell the ionomer, high viscosity dispersions will generally result.

Exposing the dispersion to temperature considerably above ambient, typically 60°C or above, after formulation of the dispersion with alcohols or other ionomer swelling solvents, generally has to be avoided to maintain low values of the viscosity. Viscosity values also depend from the polymer characteristics, including chemical structure, equivalent weight, molecular weight and the way the ionomer is processed prior to dispersion. As an example, WO2010/142772 teaches to perform fluoro-ionomer purification either by fluorination with elemental fluorine or treatment with a polar organic solvent to obtain low viscosity dispersions.

Dispersions for use in the process of the present invention typically comprise at least one polar organic solvent. Suitable polar organic solvent(s) should have dielectric constants of $\geq 15$. The polar organic solvent may be protic or non-protic. Examples of protic solvents are methanol, ethanol, 1-propanol, 2-propanol, 1-butanol, t-butanol, ethylene glycol, and mixtures and combinations thereof. The preferred solvent is 1-propanol.

Additional ingredients may be present in the ionomer dispersion used in the present invention. Mention can be made to non-ionic surfactants such as TRITON® surfactants, TERGITOL® surfactants; further, high boiling point organic additives such as triethylphosphate (TEP), N-methyl-pyrrolidone (NMP), ethylene carbonate (EC), dimethylsulphoxide (DMSO), N,N-dimethylformamide (DMF), N,N-dimethylacetamide (DMAc) may be employed.

Further ingredients may be included in the ionomer dispersion. These ingredients are typically added to enhance the mechanical and chemical durability of the membrane which is prepared starting from the dispersion. For enhancing mechanical durability, inorganic or organic ingredients may be added. Inorganic ingredients comprise for example silica particles, heteropolyacids, metal phosphates and phosphonates (typically layered zirconium phosphates and phosphonates). Organic ingredients are normally polymers, e.g. fluorinated polymers such as PTFE nanoparticles in the form of fibrils, or hydrocarbon polymers, such as polyazoles (normally in admixture with alkali metal hydroxides). For enhancing chemical durability, typically inorganic or organic scavenger molecules may be added to the dispersion. Inorganic scavengers are typically Ce or Mn compounds, such as salts or oxides, eventually supported on metal oxide nano-particles (e.g. colloidal silica). Organic scavengers may comprise for example phenols or quinones. Dispersed metal nanoparticles, e.g. Pt-group based nanoparticles, may also be included in the ionomer dispersion.

In the following section, the various processing steps of the method of the present invention are described in more detail:

The first electrode to be prepared is preferably the cathode (ref to Example 1). This confers improved characteristics to the cathode when the membrane is coated on top of the first electrode using the ionomer dispersion in accordance with the present invention. This also strongly improves the CCM performance, since the cathode is the electrode which normally has a higher influence on the final fuel cell behavior of the CCM. However, depending on the application field, in the present process the first electrode to be coated may also be the anode.

Each layer is preferably dried before the next one is coated. By drying it is intended that at least 80% of the solvent is removed from the coated layer. Generally belt drying ovens suitable for continuous production are used. Typical drying temperatures are in the range of 40 to 120°C.

As a supporting substrate (carrier substrate) for preparation of the first catalyst layer, and then supporting the complete CCM during the fabrication process, an inert, non-porous film may be used. The term "inert" refers to a support which does not react chemically with the solvents and the ionomer compounds used in the process. Further the supporting substrate should not swell by the solvents and should maintain good mechanical integrity and dimensional stability at the temperature at which the process is operated. In the prior art it is normally recommended that carrier substrates have good release properties, i.e. low surface energy, in order to allow proper detachment of the electrode and proper, complete transfer of said electrode in a decal process. Preferred substrates are e.g. fluoropolymer films or polymer films with surface treatment for good release properties, e.g. silicon treatment. Examples for such materials are PTFE films, glass fibre reinforced PTFE films, ETFE films, ECTFE films, FEP films and silicon treated PET films. Surface treated paper films may also be used.

Generally, the method according to the present invention may further comprise the step of removing the supporting substrate from the first catalyst layer. The inventors have found that, when applying the process of the present invention, good release of the catalyst layers with no residual catalyst remaining on the supporting substrate is achieved even when using supports with high surface energy, e.g. hydrocarbon polymer films with no release treatment or metal coated polymer films. This is an advantage since these films are normally easier to coat and can be obtained with very good mechanical properties (e.g. correct stiffness for good roll-to-roll processing while maintaining perfect planarity during the coating) and good dimensional stability (no shrinkage during drying and annealing of the membrane or CCM). However, also low-surface-energy supports may be used.

As a supporting substrate it is also possible to use a microporous film and even a GDL. In the latter case, the CCM is integrally joined to the GDL. If a GDL is used as a carrier substrate and a second GDL is joined to the second catalyst layer before drying, no hot-pressing steps at all are required to fabricate a complete 5-layer MEA.

Generally, the processing steps of the method of the present invention may be fully or partially carried out on a continuous manufacturing line. In particular, the successive coating of the three layers may be carried out on such a manufacturing line without intermediate winding processes. Alternatively, intermediate wind-up and unwinding can be foreseen in the case that each layer is dried after coating. The latter approach allows different coating technologies to be used e.g. for electrode and membrane production, running at different speeds.

In a specific embodiment, a first microporous layer comprising carbon black and a hydrophobic binder may be coated on the supporting substrate before coating the first electrode and a second one may be coated on top of the second electrode.

In a further embodiment, a gas-diffusion layer (GDL) can be employed as a supporting substrate. Typically gas diffusion layers, sometimes also referred to as gas diffusion media or backings, comprise carbon-based substrates such as non-woven carbon fibre paper or woven carbon fabrics. The GDLs may be optionally coated with a microporous layer comprising carbon black and a hydrophobic binder. Suitable GDLs are commercially available from different vendors.

Generally, the electrocatalysts used in the catalyst layers comprise metals, which are able to catalyze the oxidation of a fuel on the anode side and the reduction of oxygen on the cathode side. Typically, electrocatalysts comprising platinum-group metals (PGM = Ru, Os, Rh, Ir, Pd and Pt) and alloys comprising platinum-group metals and base metals are used. More typically, platinum electrocatalysts and platinum-alloy electrocatalyst are employed. Pure Pt electrocatalysts are normally employed on the anode side for fuel cells operating with pure hydrogen, while either Pt or Pt-alloys are used on the cathode side. The catalytic precious metal based particles are typically finely dispersed and preferably supported on a carbon black carrier, on an electronically conductive metal oxide carrier or on metal or ceramic core carrier. Preferably, precious metal based nanoparticles are supported on a carbon black carrier or on a conductive metal oxide carrier. The carbon black carrier may be e.g. an amorphous high surface carbon black or a graphitized carbon black or graphite. Suitable electrocatalysts are commercially available from different vendors.

Examples of electrocatalysts supported on metal or ceramic core carriers are the so called core-shell type electrocatalysts, in which the catalytically active precious metal is applied on the surface of a nano-sized metal or ceramic core particle.

Catalyst layer and electrodes containing the above electrocatalysts are typically prepared by coating steps using catalyst inks. Such catalyst inks are prepared by dispersing the electrocatalyst powders in inks, which additionally contain a dispersing medium and ionomer, as described in the prior art. Suitable dispersing media are mixtures of water and one or more polar solvents miscible in water. Ionomers included in the ink are typically provided as dispersions, such as those commercialized under the tradenames Nafion® DE, Aciplex® SS, Aquivion® D.

For the avoidance of doubt, the ionomer dispersions used for catalyst ink preparation do not have to fulfil the specific requirements regarding viscosity and ionomer concentration as outlined in the present invention.

Other additives may be added to the ink, e.g. water oxidation catalysts such as Ir or Ru-based catalyst particles to prevent the electrode from exposure to high voltages during dynamic operation. Other additives may be hydrophobic particles, e.g. PTFE, or pore-forming agents.

The catalyst inks are typically formed into electrodes by casting or printing methods as described in the art. These methods include knife coating, slot-die coating, slide coating, curtain coating, roll coating, spraying, screen printing, ink-jet printing, gravure printing, flexographic printing, etc. Generally, subsequent drying steps are applied for removal of the solvents contained in the catalyst inks.

Preferably, coating or printing methods which do not require the dosing equipment (coating head, coating roll or printing plate) to be in direct contact with the substrate to be coated, e.g. slot-die coating or ink-jet printing, are employed for direct coating of the second electrode onto the membrane in the process of the present invention. Use of such coating methods avoids direct contact to the substrate and thus prevents the risk of membrane damage, especially when the assembly contains very thin membranes.

Generally, the method of the present invention also includes embodiments, wherein vacuum deposition processes are used for the preparation of the first and second catalyst layer. In the case of the first catalyst layer, vacuum processes may be employed to prepare the catalyst layer directly on the supporting substrate. In the case of the second catalyst layer, this catalyst layer may be prefabricated by a vacuum deposition process on a suitable substrate and then transferred to the electrode/membrane assembly using a decal transfer process (i.e. the application of the second catalyst layer by decal transfer). It should be noted that, when using the decal transfer process, the catalyst layer may also be prefabricated by a coating process using catalyst inks. Mixtures and combinations are possible.

For preparation of the first catalyst layer and also for the prefabrication of the second catalyst layer in the case of a "mixed approach" (i.e., the application of the second catalyst layer by decal transfer), vacuum deposition processes may also be used. Such processes include physical vapor deposition (PVD), chemical vapor deposition (CVD) and sputtering processes. In these cases, typically organic or inorganic micro-whiskers are created on the substrate by a vacuum deposition process, usually followed by annealing, and then coated with the catalytic metal, again using a vacuum deposition process. In this manner, catalyst layers are obtained which are commonly referred to as "nano-structured thin film" catalyst layers. Preferred molecules for creating the micro-whiskers are organic planar aromatic molecules. Catalytic metals are typically platinum-group metals and metal alloys comprising platinum-group metals. Such catalyst layer fabrication methods are described e.g. in US5,338,430 and US5,879,827. A combination of vacuum deposition processes and ink coating processes may also be employed to obtain catalyst layers composed of different sub-layers having different structural and compositional characteristics, ref to e.g. WO2011/087842.

By application of the process of the present invention for the fabrication of integral CCMs, in particular, extremely low ionic resistance is achieved in the electrode resulting in CCMs with significantly improved performance under dry and wet operating conditions of the PEM fuel cell.

In order to allow a comparison between prior art CCMs and the CCMs manufactured according to the present invention, electrode resistance has to be expressed normalized to its thickness (or alternatively to precious metal loading) to allow a comparison between different CCMs. Apparent cathode resistivity values $\rho_a$ (i.e. apparent area-specific resistance normalized to cathode thickness) $<650\,\Omega$cm, and even $<300\,\Omega$cm, (measured at 85°C and 21% relative humidity) have been achieved with the integral CCMs made by the method of the present invention. $\rho_a$ can be obtained from impedance spectroscopy measurements, the active area of the cell and the cathode thickness, as detailed in the METHODS SECTION. Values of apparent cathode resistivity $\rho_a$ in the range of 25 $\Omega$cm to 650 $\Omega$cm, preferably in the range of 25 $\Omega$cm to 500 $\Omega$cm and may be obtained by the method of the present invention. Such low values have not yet been previously shown, in particular in combination with the fact that the cell performance in wet operating conditions is unaffected or even improved.

Apparent cathode resistance values normalized to precious metal (p.m.) loading $r_{LN}$ lower than 1.5 $\Omega$cm$^4$mg$^{-1}$ and even lower than 1.35 $\Omega$cm$^4$mg$^{-1}$ have been achieved by fabricating CCMs with the method of the present invention. $r_{LN}$ can be obtained from impedance spectroscopy measurements, the active area of the cell and the precious metal (p.m.) loading of the cathode, as detailed in the METHODS SECTION. Values of apparent cathode resistance (normalized to the p.m. loading) in the range of 0.1 $\Omega$cm$^4$mg$^{-1}$ to 1.5 $\Omega$cm$^4$mg$^{-1}$, preferably in the range of 0.1 $\Omega$cm$^4$mg$^{-1}$ to 1.35 $\Omega$cm$^4$mg$^{-1}$ are typically obtained by the process of the present invention. Such low values have not yet been previously reported, in particular in combination with the fact that the wet cell performance is unaffected or even improved.

The amount of ionomer and eventually the microporous reinforcement used to fabricate the membrane is chosen in order to achieve a desired membrane thickness. Typically, for applications where the cell must be operated in very dry and very wet conditions with good performance of the CCM, it is preferred that the membrane thickness is lower than 25 $\mu$m, preferably lower than 20 $\mu$m and even more preferably lower than 15 $\mu$m. Membranes with thicknesses in the range of 3 to 10 $\mu$m (ultra-thin membranes) may even be incorporated in the CCM.

Due to the use of membranes of such low thickness, particularly adapted to CCMs working both under dry and wet fuel cell operating conditions, the process of the present invention provides an ideal CCM, the catalyst layers being designed in order to work in an improved manner under the same kind of conditions.

Notably, the process of the present invention is particularly designed to integrate an ultra-thin membrane since the CCM is fabricated in a supported state on the carrier film and the membrane is never subjected to pressing steps during the CCM fabrication.

METHODS SECTION

In the following, the measurement methods, conditions and protocols for determination of some of the relevant parameters reported in the present patent application are described in more detail.

Viscosity measurement:

The viscosity of the ionomer dispersion is determined using a dynamic mechanic rheometer, using a 'couette' geometry (i.e. concentrically assembled cylinders) in steady rate sweep mode at a temperature of 25°C. A HAAKE Viscotester Type 550, a rotational Searle-type viscometer in combination with rotor/cup type NV is used. The viscosity values are determined at a shear rate of 100 s$^{-1}$ and a temperature of 25°C.

Determination of the ionomer content:

The ionomer content of the ionomer dispersion is determined gravimetrically by monitoring the weight loss of an approximately 10 grams sample upon heating to 200°C under protective nitrogen atmosphere in a box oven until constant weight is achieved.

Electrochemical testing:

Electrochemical testing of the catalyst-coated membranes (CCMs) is performed in a 50 cm$^2$ single cell fitted with graphite double channel serpentine flow fields having a channel width of 0.8 mm. The cell is operated in counter-flow. The CCMs are sealed with incompressible reinforced PTFE gaskets. A gas diffusion layer (GDL) is applied on each side of the CCM between the catalyst layer and the flow field plates. GDLs used in the experiments are Sigracet® SGL24 Bi and Sigracet® SGL25 BCH (from SGL, Meitingen, Germany) on the anode and cathode side, respectively. The GDLs are compressed to 80% of their original thickness in the single cell. The cell is air cooled by a ventilator. Operating gases are humidified by using cooled/heated bubblers. Prior to the measurements of the cell performance (by I/V-polarization) and the catalyst layer resistance (by impedance spectroscopy), the cell is preconditioned in hydrogen/air for 8 hours. The polarization measurements are carried out in hydrogen/air (stoichiometry = 1.5/2) at a pressure of 1.5 bar under the following conditions: For dry conditions, the cell temperature is held at 95°C, the humidification of anode and cathode is at 61°C. For wet conditions, the cell temperature is maintained at 60°C with anode/cathode humidification at 60°C. I/V-polarization data points are acquired from maximum current to open circuit voltage by holding the current for 15 min at each point and taking the average voltage value during the last 10 s of the current hold.

Cathode catalyst layer normalized resistance:

The catalyst layer resistance can be measured by electrochemical impedance spectroscopy, analyzing the spectra in the high frequency region. This resistance normally corresponds to the ionic resistance of the electrode, due to the fact that the electronic resistance is negligible. The method can be applied both to the anode and the cathode side of the CCM and is hereinafter applied to the cathode side obtaining what is referred to as "apparent cathode catalyst layer resistance".

The general theory of the method is described *inter alia* in R. Makharia et al., Journal of Electrochemical Society, 152 (5), A970-A977 (2005) and well known to the person skilled in the field of fuel cell electrochemistry. According to the method as applied in the present patent application, the cell is fed with hydrogen on the anode side (reference electrode) and with nitrogen on the cathode side (measured electrode), keeping the cell voltage at 0.5 V. The AC impedance spectrum is then recorded varying the frequency from 50 kHz to 0.1 Hz, applying a perturbation amplitude of 5 mV. The instrument used is a ZAHNER IM6 (Zahner Electric GmbH, Kronach, Germany).

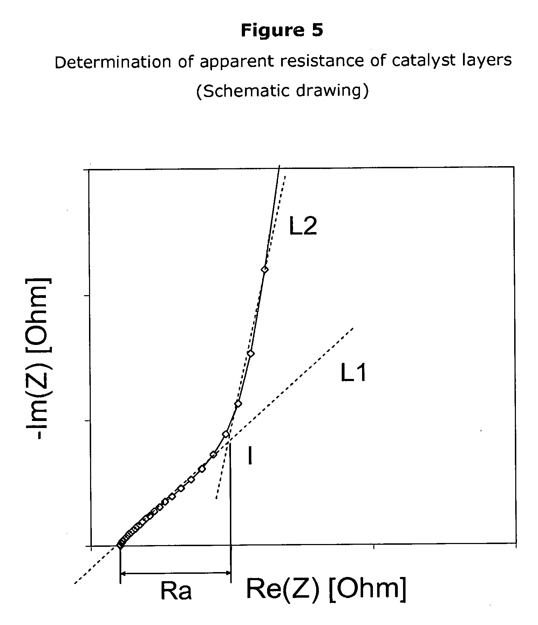

In the Nyquist-plot representation (-Im(Z) vs. Re(Z), where Z is the impedance of the cell), starting from the point at Im(Z)=0, the curve typically shows a first (approximately) 45° slope, then the curve changes to being vertical or almost vertical (ref to **Figure 5).** The change in slope is normally quite sharp and can be identified with good accuracy. A possible method to obtain the Re(Z) value at which this change in slope occurs is to interpolate the part of the curve at (approximately) 45° slope by a first line $L_1$ and the vertical (or almost vertical) part of the curve by a second line $L_2$, and taking the intercept point of the two lines. See Figure 5, point I. The apparent resistance of the catalyst layer $R_a$ is taken to be the difference between the abscissa of point I and the abscissa of the point at Im(Z)=0. (ref to **Figure 5,** parameter $R_a$).

In the case that the ionomer distribution in the catalyst layer is uniform, the theory shows that the through-plane ionic resistance of the catalyst layer ($R_{CL}$) is obtained by multiplying the apparent resistance $R_a$ as above defined by the factor of 3. In other cases, this multiplying factor can be different. The method above described for obtaining $R_a$ is of easy application, still affected by a small error being based on a manual approach.

To obtain more accurate values of the apparent resistance of the catalyst layer $R_a$, a more systematic method is used to evaluate the CCMs of the invention. In general, values obtained by this systematic method will be very close to the values obtained by the previous manual interpolation method and generally differ by no more than 5%. The method is based on the fitting of the experimental impedance data with a mathematical model which describes an equivalent electrical circuit able to give the same impedance response measured in the real cell.

The model here applied, which is a transmission line model in analogy to Makharia et al. (cited above), considers the catalyst layer as a uniform porous electrode with homogeneous distribution of the ionomer.

The impedance spectrum fitting is carried out using the SIM-program contained in Thales software package, which is included in the Zahner electrochemical workstation IM6. This fitting gives the value of the through-plane ionic resistance of the catalyst layer ($R_{CL}$), from which the apparent resistance of the catalyst layer $R_a$ is obtained dividing by 3:

$$R_a = \frac{1}{3} R_{CL}$$

Measurements are carried out at a cell temperature $T_{cell}$ = 85°C, ambient pressure and the following gas flows: 40 Nl/h of $H_2$ and 40 Nl/h of $N_2$.

The relative humidity (RH) of the gases is kept at 21% (corresponding to humidifier temperatures on both sides of 50°C). Low RH values are chosen because the ionomer catalyst layer resistance is strongly dependent from RH and differences between CCMs are easier to detect at low RH. Prior to start of the test, the cell is equilibrated at the measurement conditions.

After $R_a$ is measured, in order to compare different CCMs, a first normalization of $R_a$ is done by multiplying its value by the active CCM area $A_{CL}$ (catalyst layer working area) in $cm^2$ to obtain an area-specific resistance with units $\Omega\ cm^2$.

To compare catalyst layers with different thicknesses, normalization to the catalyst layer thickness $t_{CL}$ is done by dividing the area-specific resistance by the catalyst layer thickness (expressed in cm), to obtain an apparent catalyst layer resistivity $\rho_a$ with units $\Omega$cm:

$$\rho_a = \frac{R_a A_{CL}}{t_{CL}}$$

A different normalization of the area-specific resistance can be made to compare catalyst layers with different Pt content loading (or in general precious metal loading), independent of their thickness. In this case, the area-specific resistance is divided by the Pt (or precious metal) loading $L_{PM}$ of the catalyst layer expressed in mg/cm$^2$ to obtain a loading-normalized apparent resistance $r_{LN}$ with units $\Omega$cm$^4$mg$^{-1}$:

$$r_{LN} = \frac{R_a A_{CL}}{L_{PM}}$$

Apparent catalyst layer resistivity $\rho_a$ and loading-normalized apparent catalyst layer resistance $r_{LN}$ are used in the present patent application to compare cathodes of different CCMs.

## EXAMPLES

The following examples shall describe the invention without limiting the scope of the claims.

### Example 1

This Example describes the manufacture of an integral CCM according to the process of the present invention. Herein a fully integral process is applied, based on a reinforced membrane.

1) Manufacture of the ionomer dispersion

A short-side-chain PFSA ionomer dispersion in water, Aquivion® D79-20BS from Solvay Solexis S.p.A. (20021 Bollate (MI), IT) is taken. This dispersion has a dry content of 20 wt.-% and an equivalent weight of the ionomer EW=800 g/eq. The dispersion is concentrated by evaporating water at 60°C in a stirred glass vessel until a concentration of 28.2 wt.-% (dry content by weight) is reached. The dispersion is cooled to ambient temperature and then 1-propanol is added under moderate stirring, in order to reach the following composition of the dispersion:

| | |
|---|---|
| Ionomer content: | 18 wt.-% |
| Liquid medium content: | 82 wt.-% |
| Liquid medium composition: | water: 56 wt.-% |
| | 1-propanol: 44 wt.-%. |

The dispersion is submitted to a viscosity measurement on a rheometer (HAAKE Viscotester 550 with rotor/cup NV). The viscosity at 25°C, 100 s$^{-1}$ is 63 cP with a substantially Newtonian behaviour over the shear rate interval of 10 -1000 s$^{-1}$.

2) Manufacture of the first catalyst layer (Pt-alloy cathode)

A mixture comprising 216.5 g of aqueous ionomer dispersion (Aquivion® D83-20B, 20 wt.-% ionomer in water (Solvay Solexis S.p.A., Bollate, IT), 162.4 g of 4-Hydroxy-4-methyl-2-pentanone (diacetone alcohol, MERCK) and 162.4 g of t-butanol (MERCK) is stirred and heated at 60°C for 1 hour in a flask. The mixture is cooled to room temperature and transferred into a mixer equipped with a mechanical stirrer. Subsequently, additional 372.1 g of 4-Hydroxy-4-methyl-2-pentanone and 86.7 g of alloy electrocatalyst on carbon black (platinum-cobalt, 50 wt.-% PtCo/C) are added while keeping the mixture under gentle stirring. The catalyst/ionomer weight ratio in the ink is 2/1. The mixture is further stirred for 5 minutes and the stirring speed is raised.

The ink is applied on a fluorinated carrier substrate film by knife-coating. A roll of carrier film is unwound at one end of a coating machine and passed through a coating section equipped with a knife-coater where the ink is deposited on the substrate. The film is subsequently passed through an oven where the catalyst layer is dried at 100°C for 5 minutes. The catalyst layer on roll is finally wound up at the end of the coating machine. The thickness of the resulting cathode catalyst layer is 10 $\mu$m and the precious metal loading (Pt loading) is 0.35 mg/cm$^2$.

3) Application of the ionomer layer membrane manufacture)

A roll with several meters of the Pt-alloy cathode electrode on carrier substrate obtained in step 2) is mounted on an unwinding roller and unwound. A TETRATEX® #3101 expanded PTFE (ePTFE) porous film (Donaldson Company, Inc.) in roll form, having a thickness of 38 $\mu$m, is unwound to pass into a vessel containing 15 l of the ionomer dispersion as prepared in step 1) in order to impregnate it with the dispersion. The dispersion contained in the vessel is kept well mixed during the process by a recirculation pump at ambient temperature. The cathode electrode is coupled and made to adhere to the impregnated ePTFE film, still wet, coming out of the impregnation bath, and the assembly is made to move at a constant speed.

For drying, the assembly is then run through an oven kept at 80°C with air recirculation and subsequently wound up. Two engines, the first at the beginning of the line, where the electrode on carrier substrate is unwound, the second at the end of the line after the oven, maintain the carrier substrate/cathode/impregnated ePTFE assembly to the required speed.

4) Application of the second catalyst layer (anode layer)

An anode catalyst ink is prepared according to the procedure as described in step 2) for the Pt-alloy cathode ink, with the following variations: The amount of aqueous ionomer dispersion is 336.5 g, the amount of 4-Hydroxy-4-methyl-2-pentanone is 269.2 g for the first addition and 84.8 g for the second addition, the amount of t-butanol is 269.2 g. Instead of the platinum cobalt alloy electrocatalyst, a pure platinum electrocatalyst on carbon black is used (20 wt.-% Pt/C). This material is added in an amount of 74.0 g. The catalyst/ionomer weight ratio in the ink is 1.1/1.

The cathode layer/reinforced membrane assembly, still on the carrier substrate, is then passed through a coating machine equipped with a knife-coater where an anode ink as prepared above is coated on the free surface of the membrane. The assembly is then passed through an air-recirculation oven where the anode layer is dried at 100°C. The assembly is further annealed at 190°C. The CCM roll thus obtained is separated from the carrier substrate.

Electrochemical testing

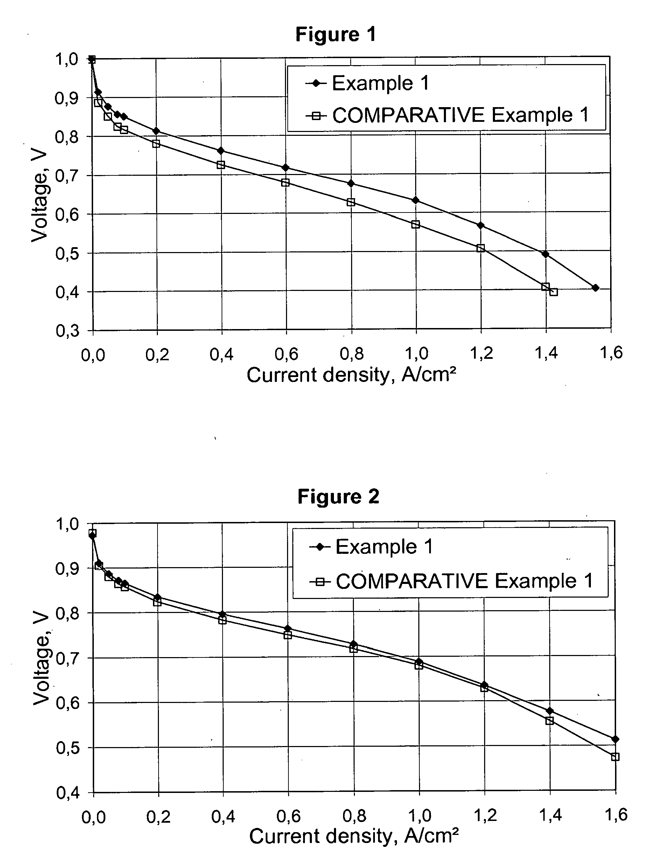

Two square CCM pieces are cut out from the roll and electrochemical characterization is carried out. The two CCMs are measured for polarization curves and catalyst layer resistance. For each CCM two measurements are taken and the averages of the four measurements recorded. The polarization curves under dry and wet operating conditions are shown in **Figure 1** (dry) and **Figure 2** (wet). The normalized cathode resistance values ($\rho_a$ and $r_{LN}$) are reported in **Table 1.**

**Comparative Example 1**

This Comparative Example describes the manufacture of an integral CCM according to Example 1; however, a high viscosity dispersion is used (according to prior art).

Example 1 is repeated except that the 18 wt.-% ionomer dispersion in water/1-propanol is heat treated prior to use for membrane manufacturing to increase its viscosity. Heat treatment is carried out at 80°C for 4 h in a flask. The flask is equipped with a water-cooled condenser in order to avoid 1-propanol solvent loss. It should be noted that the viscosity increase of the dispersion is due to polymer swelling effects, the solid content of the ionomer dispersion remains constant at 18 wt.-%. The viscosity is 455 cP as detected with HAAKE Viscotester at 25°C and a shear rate of 100 s$^{-1}$.

Polarization curves (dry and wet) and cathode resistance values are reported in **Figure 1** (dry), **Figure 2** (wet) and **Table 1**, cf. Comparative Example 1.

**Table 1:** Comparative data of normalized cathode resistance values ($\rho_a$ and $r_{LN}$)

| | Apparent catalyst layer resistivity $\rho_a$ [$\Omega$ cm] | Loading-normalized apparent resistance $r_{LN}$ [$\Omega$ cm$^4$ mg$^{-1}$] |
|---|---|---|
| Example 1 | 448 | 1.28 |
| Comparative Example 1 | 970 | 2.77 |
| Example 2 | 257 | 0.80 |
| Comparative Example 2 | 682 | 2.12 |
| Example 3 | 466 | 1.33 |
| Comparative Example 3 | 1877 | 5.36 |

It can be seen from these figures that the electrochemical performance of the CCMs manufactured according to the present invention is clearly improved vs. CCMs made according to the prior art process. This is especially true for dry conditions (ref to **Figure 1**) but also for wet operating conditions (ref to **Figure 2**). Thus the CCMs manufactured according to the present process are very versatile and show improved performance under all humidity conditions. In addition to the I/V polarisation data, the values of the normalized cathode resistance (i.e. the values of apparent catalyst layer resistivity $\rho_a$ and loading-normalized apparent resistance $r_{LN}$) are significantly reduced in the CCM manufactured according to the present invention (ref to **Table 1).** This finding is consistent with the improved fuel cell performance.

### Example 2

This Example describes the manufacture of an integral CCM according to the invention. Herein, a fully integral process is applied, based on a cast ionomer membrane.

1) Manufacture of the ionomer dispersion

A short-side-chain PFSA ionomer dispersion in water, Aquivion® D83-20B from Solvay-Solexis S.p.A. (Bollate, IT) is employed. This dispersion has a dry content of 20 wt.-% and an equivalent weight of the ionomer EW=830 g/eq. The dispersion is concentrated by evaporating water at 60°C in a stirred glass vessel until a concentration of 30.8 wt.-% (dry content by weight) is reached. The dispersion is cooled to ambient temperature and then 1-propanol is added under moderate stirring, in order to reach the following composition of the dispersion:

| | |
|---|---|
| Ionomer content: | 20 wt.-% |
| Liquid medium content: | 80 wt.-% |
| Liquid medium composition: | water: 56 wt.-% |
| | 1-propanol: 44 wt.-%. |

The viscosity at 25°C, 100 s$^{-1}$ is 80 cP with a substantially Newtonian behaviour over the shear rate interval of 10 - 1000 s$^{-1}$ (HAAKE Viscotester).

2) Manufacture of the first catalyst layer (pure Pt cathode)

A mixture comprising 263 g of aqueous ionomer dispersion (Aquivion® D83-20B, 20 wt.-% ionomer in water (Solvay Solexis S.p.A., Bollate, IT), 197 g of 4-Hydroxy-4-methyl-2-pentanone (diacetone alcohol, MERCK) and 197 g of t-butanol (MERCK) is stirred and heated at 60°C for 1 hour in a flask. The mixture is cooled to room temperature and transferred into a mixer equipped with a mechanical stirrer. Subsequently, additional 235 g of 4-Hydroxy-4-methyl-2-pentanone and 108 g of electrocatalyst on carbon black (pure platinum, 40 wt.-% Pt/C) are added while keeping the mixture under gentle stirring. The catalyst/ionomer weight ratio in the ink is 2.05/1.

The ink is applied on a fluorinated carrier substrate film by knife-coating as detailed in Example 1 for the Pt-alloy cathode ink. The thickness of the resulting cathode catalyst layer after drying is 14 $\mu$m and the precious metal loading (Pt loading) is 0.45 mg/cm$^2$.

3) <u>Application of the ionomer layer (membrane manufacture)</u>

The cathode layer on the carrier substrate is then passed through a coating machine equipped with a knife-coater. The ionomer dispersion manufactured in step 1) is coated on the free surface of the catalyst layer. The blade of the knife is set at a distance of 600 $\mu$m above the surface of the electrode. The assembly is then passed through an air-recirculation oven where the membrane is dried at 80°C.

4) <u>Application of the second catalyst layer (anode layer)</u>

An anode catalyst ink is prepared as in Example 1. The cathode layer/cast membrane assembly, still on the carrier substrate, is then passed through a coating machine equipped with a knife-coater where the anode ink is coated on the free surface of the membrane. The assembly is then passed through an air-recirculation oven where the anode layer is dried at 100°C. The assembly is further annealed at 190°C. The CCM roll thus obtained is separated from the carrier substrate.

<u>Electrochemical testing</u>

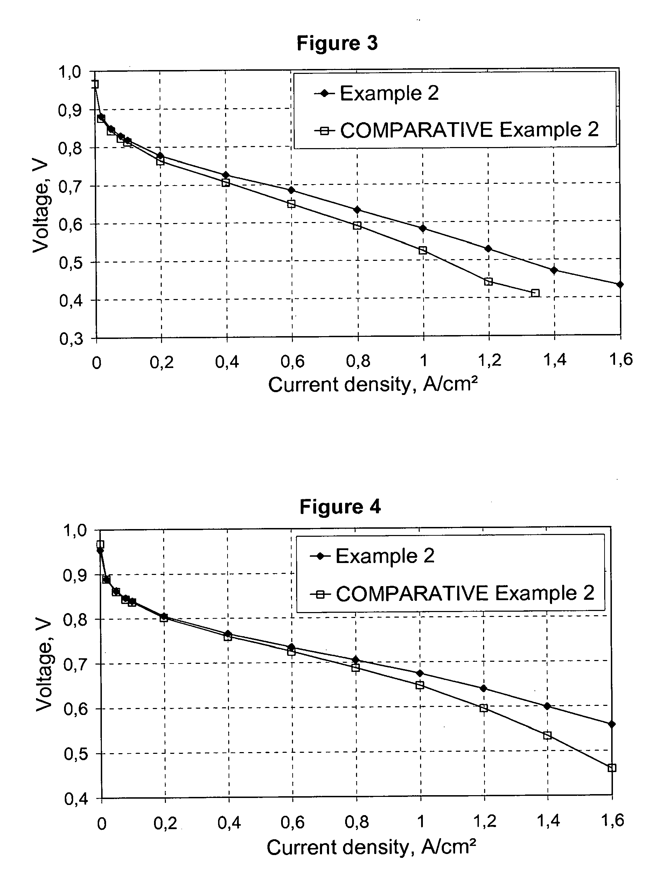

Two square CCM pieces are cut out from the roll and electrochemical characterization is carried out as described in Example 1. The polarization curves under dry and wet conditions are reported in **Figure 3** (dry) and **Figure 4** (wet operating conditions). The normalized cathode resistance values ($\rho_a$ and $r_{LN}$) are reported in **Table 1.**

**Comparative Example 2**

This Comparative Example describes the manufacture of an integral CCM according to Example 2; however, a high viscosity dispersion is used (according to prior art)
Example 2 is repeated except that the 20 wt.-% ionomer dispersion in water/1-propanol is heat treated prior to use for membrane manufacturing to increase its viscosity. Heat treatment is carried out at 80°C for 4h in a flask. The flask is equipped with a water-cooled condenser in order to avoid 1-propanol removal and maintain the concentration of the dispersion constant. The viscosity at 25°C at a shear rate of 100 s$^{-1}$ is 495 cP (HAAKE Viscotester).
I/V-polarization curves (for dry and wet operating conditions) and cathode resistance values are reported in **Figure 3** (dry) and **Figure 4** (wet). The cathode resistance values are listed in **Table 1,** ref. to Comparative Example 2.
Similar conclusions can be made as stated in Examples 1 and Comparative Example 1. Again, it can be seen that with the CCMs of the present process, the I/V performance is improved and the normalized cathode resistance values are significantly reduced.

**Example 3**

This Example describes the manufacture of an integral CCM according to the invention; however, the anode catalyst layer is applied by a Decal process ("Mixed approach").
Example 1 is repeated except that the second catalyst layer (anode layer) is applied by decal transfer rather than by direct coating on top of the membrane. To this purpose, the anode ink is applied to a fluorinated carrier substrate (release film) by knife-coating and dried at 100°C prior to transfer. Conditions for the decal transfer are: temperature 220°C; pressure 175N/cm$^2$; time = 45 s.
The normalized cathode resistance values of the resulting CCMs are reported in **Table 1.**

**Comparative Example 3**

This Comparative Example describes the manufacture of a CCM according to the prior art (using decal transfer to a pre-fabricated reinforced ionomer membrane).
A reinforced membrane, 22 $\mu$m in thickness, is obtained by impregnating a TETRATEX® #3101 expanded PTFE porous film (Donaldson Company, Inc.) with the ionomer dispersion manufactured in Example 1, step 1). Impregnation is carried out by dip coating on a coating line, the dispersion is evaporated and the membrane is annealed at 190°C.
Cathode and anode electrodes are obtained on a fluorinated carrier substrate (decal release film) by knife-coating starting from the same inks as used in Example 3. The electrodes are dried at 100°C and decal transferred to the membrane using the following conditions: temperature 220°C; pressure 175N/cm$^2$ and time 45 s. The normalized cathode resistance values of the resulting CCMs are reported in **Table 1.** It can be seen that the values are significantly higher than those obtained in Example 3.

## Comparative Example 4

This Comparative Example describes the manufacture of an integral CCM according to the prior art (use of a low concentration ionomer dispersion).

To 600 g of an aqueous ionomer dispersion (Aquivion® D83-20B, Solvay Solexis S.p.A., Bollate, IT) having 20 wt.-% dry content and ionomer EW=830 g/eq are added 450 g of 4-Hydroxy-4-methyl-2-pentanone (diacetone alcohol, MERCK) and 450 g of t-butanol (MERCK). The dispersion is kept under stirring and heated to 60°C for 1 hour in a flask. The flask is equipped with a water-cooled condenser in order to avoid concentration of the dispersion. The resulting ionomer dispersion has the following composition:

| | |
|---|---|
| Ionomer content: | 8 wt.-% |
| Liquid medium content: | 92 wt.-% |
| Liquid medium composition: | water: 34.8 wt.-% |
| | diacetone alcohol: 32.6 wt.-% |
| | t-butanol: 32.6 wt.-%. |

The viscosity at 25°C at a shear rate of 100 s$^{-1}$ is 120 cP (HAAKE Viscotester).

A piece of cathode catalyst layer on fluorinated supporting substrate film as prepared in Example 1, step 2), is fixed to the plate of a lab-coating table and overcoated by knife-coating with the 8 wt.-% ionomer dispersion prepared above to obtain a membrane on top of the catalyst layer. The blade of the knife is set at a distance of 1500 $\mu$m above the surface of the electrode. Large parts of the catalyst layer are removed from the supporting substrate and it is impossible to fabricate a CCM.

This Comparative Example shows that low concentration ionomer dispersions are not suited for the fabrication of an integral CCM based on an integral process. It is important to note, that for the method of the present invention, specific ionomer dispersions showing the combined features of a certain low viscosity range and a high ionomer concentration are necessary.

## Claims

1.  Method for preparing a 3-layer catalyst-coated membrane (CCM) comprising a first catalyst layer, an ionomer membrane and a second catalyst layer, said method comprising the steps of

    a) preparing a first catalyst layer on a supporting substrate,
    b) coating the first catalyst layer with an ionomer dispersion to form an ionomer membrane in contact with the first catalyst layer,
    c) applying the second catalyst layer on top of the ionomer membrane,

    wherein the ionomer dispersion applied in step b) has a viscosity in the range of 0,01 to 0,4 Pa.s (10 to 400 centipoise), measured at 25 °C and a shear rate of 100 s$^{-1}$, and an ionomer concentration in the range of 15 to 35 wt.-%.

2.  Method according to claim 1, wherein in step a) the first catalyst layer is prepared by a coating process using a catalyst ink, by a vacuum deposition process or by combinations thereof.

3.  Method according to claim 1 or 2, wherein in step c) the second catalyst layer is applied by a coating process using a catalyst ink.

4.  Method according to claim 1 or 2, wherein in step c) the second catalyst layer is applied by a decal transfer process transferring a prefabricated catalyst layer on top of the ionomer membrane using heat and pressure.

5.  Method according to claim 4, wherein in said decal transfer process the prefabricated catalyst layer is prepared by a coating process using a catalyst ink, by a vacuum deposition process or by combinations thereof

6.  Method according to any one of claims 1 to 5, further comprising the step of

    d) annealing the layer structure at temperatures of at least 120°C after step b) and/or step c).

7. Method according to any one of claims 1 to 6, further comprising additional drying steps at least after step a) and b), using drying temperatures in the range of 40 to 120°C.

8. Method according to any one of claims 1 to 7, wherein the ionomer membrane is a cast membrane, comprising predominantly ionomer.

9. Method according to any one of claims 1 to 8, wherein the ionomer membrane is a reinforced membrane, comprising a microporous reinforcement film.

10. Method according to claim 9, wherein the microporous reinforcement film comprises expanded PTFE.

11. Method according to any one of claims 1 to 10, wherein the ionomer dispersion comprises fully or partially fluorinated polymers.

12. Method according to claim 11, wherein the fully or partially fluorinated polymers contain functional groups selected from sulfonic ($-SO_3H$), carboxylic ($-COOH$), phosphonic ($-PO_3H_2$), sulfonyl amide ($-SO_2NH_2$), bis-sulfonyl imide ($-SO_2NHSO_2-$), bis-carbonyl imide ($-CONHCO-$) and sulfonyl carbonyl imide ($-SO_2NHCO-$) groups and mixtures and combinations thereof.

13. Method according to any one of claims 1 to 12, wherein the ionomer dispersion comprises water and at least one polar organic solvent with a dielectric constant $\geq 15$.

14. Method according to any one of claims 1 to 13, wherein the catalyst layers comprise platinum-group based electro-catalysts.

15. Method according to any one of claims 1 to 14, wherein the catalyst layers are applied by casting or printing inks by methods selected from the group of knife coating, slot-die coating, slide coating, curtain coating, roll coating, screen printing, ink-jet printing, gravure printing and flexographic printing and combinations thereof.

16. Method according to any one of claims 1 to 15, wherein the first catalyst layer applied in step a) is the cathode layer.

17. Method according to any one of claims 1 to 16, further comprising the step of removing the supporting substrate from the first catalyst layer of the CCM assembly.

18. Method according to any one of claims 1 to 17, wherein the supporting substrate for applying the first catalyst layer in step a) is an inert polymer film or paper film.

19. Method according to any one of claims 1 to 16, wherein the supporting substrate is a gas diffusion layer.

20. Method according to any one of claims 1 to 19, wherein the supporting substrate is coated with a microporous layer comprising carbon black and a hydrophobic binder prior to preparing the first catalyst layer.

21. Method according to any one of claims 1 to 20, fully or partially carried out on a continuous manufacturing line.

22. Method according to claim 1, wherein the ionomer dispersion applied in step b) has a viscosity in the range of 10 to 80 centipoise (cP).

23. Catalyst-coated membrane (CCM), obtainable by the method according to any one of claims 1 to 22, wherein the apparent cathode catalyst layer resistivity $\rho_a$ is less than 650 $\Omega$cm (measured at 85°C and 21% relative humidity).

24. Catalyst-coated membrane (CCM), obtainable by the method according to any one of claims 1 to 22, wherein the apparent cathode catalyst layer resistance $r_{LN}$ (normalized to the precious metal loading) is in the range of 0.1 $\Omega$ cm$^4$mg$^{-1}$ to 1.5 $\Omega$cm$^4$mg$^{-1}$ (measured at 85°C and 21% relative humidity).

**Patentansprüche**

1. Verfahren zur Herstellung einer dreilagigen katalysatorbeschichteten Membran (catalyst-coated membrane, CCM), die eine erste Katalysatorschicht, eine Ionomermembran und eine zweite Katalysatorschicht umfasst, wobei das Verfahren die folgenden Schritte umfasst:

a) Herstellen einer ersten Katalysatorschicht auf einem Trägersubstrat,
b) Beschichten der ersten Katalysatorschicht mit einer Ionomerdispersion, um eine Ionomermembran zu bilden, die mit der ersten Katalysatorschicht in Kontakt steht,
c) Aufbringen der zweiten Katalysatorschicht auf die Ionomermembran,

wobei die in Schritt b) aufgebrachte Ionomerdispersion eine Viskosität im Bereich zwischen 0,01 und 0,4 Pa.s (10 bis 400 Centipoise), gemessen bei 25 °C, und eine Scherrate von 100 s$^{-1}$ und eine Ionomerkonzentration im Bereich zwischen 15 und 35 Gew.-% aufweist.

2. Verfahren nach Anspruch 1, wobei in Schritt a) die erste Katalysatorschicht durch einen Beschichtungsprozess unter Verwendung einer Katalysatortinte, durch ein Vakuumbeschichtungsverfahren oder durch Kombinationen davon hergestellt wird.

3. Verfahren nach Anspruch 1 oder 2, wobei in Schritt c) die zweite Katalysatorschicht durch einen Beschichtungsprozess unter Verwendung einer Katalysatortinte aufgebracht wird.

4. Verfahren nach Anspruch 1 oder 2, wobei in Schritt c) die zweite Katalysatorschicht durch einen Decal-Prozess aufgebracht wird, bei dem eine vorgefertigte Katalysatorschicht mittels Wärme und Druck auf die Ionomermembran übertragen wird.

5. Verfahren nach Anspruch 4, wobei bei dem Decal-Prozess die vorgefertigte Katalysatorschicht durch einen Beschichtungsprozess unter Verwendung einer Katalysatortinte, durch ein Vakuumbeschichtungsverfahren oder durch Kombinationen davon hergestellt wird.

6. Verfahren nach einem der Ansprüche 1 bis 5, das weiterhin folgenden Schritt umfasst:

d) Tempern der Schichtstruktur bei Temperaturen von mindestens 120 °C nach Schritt b) und/oder Schritt c).

7. Verfahren nach einem der Ansprüche 1 bis 6, das weiterhin zusätzliche Trocknungsschritte mindestens nach Schritt a) und b) umfasst, wobei Trocknungstemperaturen im Bereich zwischen 40 und 120 °C zur Anwendung kommen.

8. Verfahren nach einem der Ansprüche 1 bis 7, wobei es sich bei der Ionomermembran um eine Gussmembran handelt, die überwiegend Ionomer umfasst.

9. Verfahren nach einem der Ansprüche 1 bis 8, wobei es sich bei der Ionomermembran um eine verstärkte Membran handelt, die eine mikroporöse Verstärkungsfolie umfasst.

10. Verfahren nach Anspruch 9, wobei die mikroporöse Verstärkungsfolie expandiertes PTFE umfasst.

11. Verfahren nach einem der Ansprüche 1 bis 10, wobei die Ionomerdispersion vollständig oder teilweise fluorierte Polymere umfasst.

12. Verfahren nach Anspruch 11, wobei die vollständig oder teilweise fluorierten Polymere Funktionsgruppen, ausgewählt aus Sulfon- (-SO$_3$H), Carboxyl- (-COOH), Phosphon- (-PO$_3$H$_2$), Sulfonylamid- (-SO$_2$NH$_2$), Bis-Sulfonylimid-(-SO$_2$NHSO$_2$-), Bis-Carbonylimid- (-CONHCO-) und Sulfonyl-Carbonylimid- (-SO$_2$NHCO-) -Gruppen und -Gemischen und Kombinationen davon, enthalten.

13. Verfahren nach einem der Ansprüche 1 bis 12, wobei die Ionomerdispersion Wasser und mindestens ein polares organisches Lösemittel mit einer dielektrischen Konstante $\geq 15$ umfasst.

14. Verfahren nach einem der Ansprüche 1 bis 13, wobei die Katalysatorschichten Platingruppen-basierte Elektrokatalysatoren umfassen.

15. Verfahren nach einem der Ansprüche 1 bis 14, wobei die Katalysatorschichten durch Gießen oder Drucken von Tinten durch Verfahren aufgebracht werden, die aus der folgenden Gruppe ausgewählt werden: Rakelbeschichtung, Düsenbeschichtung, Gleitbeschichtung, Lackgießverfahren, Walzenauftrag, Siebdruck, Tintenstrahldruck, Tiefdruck und Flexodruck, sowie Kombinationen davon.

16. Verfahren nach einem der Ansprüche 1 bis 15, wobei es sich bei der ersten, in Schritt a) aufgebrachten Katalysatorschicht um die Kathodenschicht handelt.

17. Verfahren nach einem der Ansprüche 1 bis 16, das weiterhin den Schritt des Abtragens des Trägersubstrats von der ersten Katalysatorschicht des CCM-Aufbaus umfasst.

18. Verfahren nach einem der Ansprüche 1 bis 17, wobei es sich bei dem Trägersubstrat zum Aufbringen der ersten Katalysatorschicht in Schritt a) um eine inerte Polymerfolie oder eine Papierfolie handelt.

19. Verfahren nach einem der Ansprüche 1 bis 16, wobei es sich bei dem Trägersubstrat um eine Gasdiffusionsschicht handelt.

20. Verfahren nach einem der Ansprüche 1 bis 19, wobei das Trägersubstrat mit einer mikroporösen Schicht beschichtet ist, die vor der Herstellung der ersten Katalysatorschicht Ruß und ein hydrophobes Bindemittel umfasst.

21. Verfahren nach einem der Ansprüche 1 bis 20, das ganz oder teilweise auf einer durchgehenden Fertigungsstraße ausgeführt wird.

22. Verfahren nach Anspruch 1, wobei die in Schritt b) aufgebrachte Ionomerdispersion eine Viskosität im Bereich zwischen 0,01 und 0,08 Pa.s (10 bis 80 Centipoise (cP)) aufweist.

23. Katalysatorbeschichtete Membran (CCM), erhältlich durch das Verfahren nach einem der Ansprüche 1 bis 22, wobei der scheinbare spezifische Widerstand $\rho_a$ der Kathoden-Katalysatorschicht (gemessen bei 85 °C und 21 % relativer Luftfeuchtigkeit) weniger als 650 $\Omega$cm beträgt.

24. Katalysatorbeschichtete Membran (CCM), erhältlich durch das Verfahren nach einem der Ansprüche 1 bis 22, wobei der scheinbare spezifische Widerstand der Kathoden-Katalysatorschicht $r_{LN}$ (normiert auf die Edelmetallbeladung) im Bereich zwischen 0,1 $\Omega$cm$^4$mg$^{-1}$ und 1,5 $\Omega$cm$^4$mg$^{-1}$ liegt (gemessen bei 85 °C und 21 % relativer Luftfeuchtigkeit).

**Revendications**

1. Procédé de préparation d'une membrane revêtue de catalyseur (CCM) à 3 couches, comprenant une première couche de catalyseur, une membrane ionomère et une seconde couche de catalyseur, ledit procédé comprenant les étapes consistant à

   a) préparer une première couche de catalyseur sur un substrat de support,
   b) revêtir la première couche de catalyseur avec une dispersion ionomère afin de former une membrane ionomère en contact avec la première couche de catalyseur,
   c) appliquer la seconde couche de catalyseur sur le dessus de la membrane ionomère,

   dans lequel la dispersion ionomère appliquée dans l'étape b) présente une viscosité dans la plage de 0,01 à 0,4 Pa.s (10 à 400 centipoises), mesurée à 25 °C et à un taux de cisaillement de 100 s$^{-1}$ et une concentration en ionomère dans la plage de 15 à 35 % en poids.

2. Procédé selon la revendication 1, dans lequel, pendant l'étape a), la première couche de catalyseur est préparée par un processus de revêtement à l'aide d'une encre de catalyseur, par un processus de dépôt sous vide ou par leurs combinaisons.

3. Procédé selon la revendication 1 ou 2, dans lequel, pendant l'étape c), la seconde couche de catalyseur est appliquée par un processus de revêtement à l'aide d'une encre de catalyseur.

4. Procédé selon la revendication 1 ou 2, dans lequel, pendant l'étape c), la seconde couche de catalyseur est appliquée par un processus de transfert par décalque, transférant une couche de catalyseur préfabriquée à l'aide de chaleur et de pression.

**5.** Procédé selon la revendication 4, dans lequel, pendant ledit processus de transfert par décalque, la couche de catalyseur préfabriquée est préparée par un processus de revêtement à l'aide d'une encre de catalyseur, par un processus de dépôt sous vide ou par leurs combinaisons.

**6.** Procédé selon l'une quelconque des revendications 1 à 5, comprenant en outre les étapes consistant à

   d) recuire la structure de couche à des températures d'au moins 120 °C après l'étape b) et/ou l'étape c).

**7.** Procédé selon l'une quelconque des revendications 1 à 6, comprenant en outre des étapes de séchage supplémentaires au moins après l'étape a) et l'étape b), en utilisant des températures de séchage dans la plage de 40 à 120 °C.

**8.** Procédé selon l'une quelconque des revendications 1 à 7, dans lequel la membrane ionomère est une membrane coulée, comprenant principalement un ionomère.

**9.** Procédé selon l'une quelconque des revendications 1 à 8, dans lequel la membrane ionomère est une membrane renforcée, comprenant un film de renfort microporeux.

**10.** Procédé selon la revendication 9, dans lequel le film de renfort microporeux comprend du PTFE expansé.

**11.** Procédé selon l'une quelconque des revendications 1 à 10, dans lequel la dispersion ionomère comprend des polymères complètement ou partiellement fluorés.

**12.** Procédé selon la revendication 11, dans lequel les polymères totalement ou partiellement fluorés contiennent des groupes fonctionnels sélectionnés parmi les groupes sulfonique ($-SO_3H$), carboxylique ($-COOH$), phosphonique ($-PO_3H_2$), sulfonyl-amide ($-SO_2NH_2$), bis-sulfonyl-imide ($-SO_2NHSO_2-$), bis-carbonyl-imide ($-CONHCO-$) et sulfonyl-carbonyl-imide ($-SO_2NHCO-$) et leurs mélanges et combinaisons.

**13.** Procédé selon l'une quelconque des revendications 1 à 12, dans lequel la dispersion ionomère comprend de l'eau et au moins un solvant organique polaire avec une constante diélectrique $\geq 15$.

**14.** Procédé selon l'une quelconque des revendications 1 à 13, dans lequel les couches de catalyseur comprennent des électrocatalyseurs basés sur le groupe platine.

**15.** Procédé selon l'une quelconque des revendications 1 à 14, dans lequel les couches de catalyseur sont appliquées par coulage ou impression d'encres selon des procédés sélectionnés dans le groupe composé du revêtement à la racle, du revêtement par filière plate, du revêtement glissant, du revêtement par rideau, du revêtement par rouleau, de la sérigraphie, de l'impression à jet d'encre, de l'héliogravure et de la flexographie, ainsi que leurs combinaisons.

**16.** Procédé selon l'une quelconque des revendications 1 à 15, dans lequel la première couche de catalyseur appliquée dans l'étape a) est la couche de cathode.

**17.** Procédé selon l'une quelconque des revendications 1 à 16, comprenant en outre l'étape consistant à retirer le substrat de support de la première couche de catalyseur de l'ensemble CCM.

**18.** Procédé selon l'une quelconque des revendications 1 à 17, dans lequel le substrat de support destiné à appliquer la première couche de catalyseur dans l'étape a) est un film en polymère inerte ou un film en papier.

**19.** Procédé selon l'une quelconque des revendications 1 à 16, dans lequel le substrat de support est une couche de diffusion de gaz.

**20.** Procédé selon l'une quelconque des revendications 1 à 19, dans lequel le substrat de support est revêtu d'une couche microporeuse comprenant du noir de carbone et un liant hydrophobe avant la préparation de la première couche de catalyseur.

**21.** Procédé selon l'une quelconque des revendications 1 à 20, réalisé totalement ou partiellement sur une chaîne de fabrication continue.

**22.** Procédé selon la revendication 1, dans lequel la dispersion ionomère appliquée dans l'étape b) présente une viscosité dans la plage de 0,01 à 0,08 Pa.s (10 à 80 centipoises (cP)).

**23.** Membrane revêtue de catalyseur (CCM), pouvant être obtenue par le procédé selon l'une quelconque des revendications 1 à 22, dans laquelle la résistivité apparente de couche de catalyseur de cathode $p_a$ est inférieure à 650 $\Omega$cm (mesurée à 85 °C et 21 % d'humidité relative).

**24.** Membrane revêtue de catalyseur (CCM), pouvant être obtenue par le procédé selon l'une quelconque des revendications 1 à 22, dans laquelle la résistance apparente de couche de catalyseur de cathode $r_{LN}$ (normalisée au chargement de métal précieux) se trouve dans la plage de 0,1 $\Omega$cm$^4$mg$^{-1}$ à 1,5 $\Omega$cm$^4$mg$^{-1}$ (mesurée à 85 °C et 21 % d'humidité relative).

**Figure 1**

**Figure 2**

## Figure 3

## Figure 4

**Figure 5**

Determination of apparent resistance of catalyst layers
(Schematic drawing)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6074692 A
- US 7285307 B
- EP 1645001 A
- EP 1702669 B1
- EP 1438762 B1
- US 6855178 B2
- US 20050019649 A1
- US 20060057281 A1
- US 20060057281 A
- WO 2010142772 A

- US 7947405 B
- US 7867669 B
- US 4433082 A
- GB 1286859 A
- EP 1004615 A
- US 6150426 A
- US 5338430 A
- US 5879827 A
- WO 2011087842 A

**Non-patent literature cited in the description**

- Manufacturing of low-cost, durable MEAs engineered for rapid conditioning. W.L. Gore & Associates, Inc, 09 May 2011

- **R. MAKHARIA et al.** *Journal of Electrochemical Society,* 2005, vol. 152 (5), A970-A977